# FASCICULE DE BREVET EUROPEEN

(11) **EP 2 196 080 B1**
(45) Date de publication et mention de la délivrance du brevet: **16.03.2016**
(21) Numéro de dépôt: 09358011.6
(22) Date de dépôt: 03.12.2009
(51) Int. Cl.: A01D 46/28, A01D 46/26

(54) **Machine de récolte de petits fruits produits en arboriculture fruitière**
Erntemaschine für kleine Früchte im Obstanbau
Machine for harvesting berries produced by fruit arboriculture

(30) Priorité: 10.12.2008 FR 0806915
(43) Date de publication de la demande: 16.06.2010
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR); Rolland, Christian, 84160 Cucuron (FR)
(74) Mandataire: Marek, Pierre

(56) Documents cités:
- EP-A- 0 368 773
- WO-A-02/19794
- WO-A-97/15182
- WO-A-97/47176
- FR-A1- 2 298 929
- US-A- 4 750 322

## Description

La présente invention concerne une machine de récolte de petits fruits produits en arboriculture fruitière, en particulier en oléiculture, pour la récolte ou vendange des olives. Plus précisément, l'invention se rattache à la tête de récolte de cette machine.

On connaît les machines à vendanger le raisin comportant une tête de récolte comprenant un système de secouage constitué de deux ensembles de détachement des baies montés en vis-à-vis et comportant, chacun, une pluralité de secoueurs superposés, par exemple constitués par des barreaux flexibles, fixés, par l'intermédiaire de leurs extrémités, à deux arbres verticaux dont l'un au moins est un arbre d'actionnement oscillant assujetti à une commande de secouage permettant de lui communiquer un mouvement oscillatoire.

Ces machines à vendanger comprennent aussi un porteur-enjambeur comportant un robuste châssis comprenant des éléments de soutien latéraux espacés, assemblés à leur partie supérieure par un pont ou voûte, de sorte que ledit châssis présente la forme d'un portique mobile apte à enjamber au moins un rang de vigne, en cours de travail.

La tête de récolte peut être suspendue à la voûte du châssis du porteur-enjambeur de manière permanente ou amovible. La machine de récolte peut être automotrice ou attelée à un tracteur-enjambeur ; dans ce cas, ce dernier comprend son propre châssis-enjambeur présentant une voûte supérieure reliant les éléments latéraux dudit châssis-enjambeur.

Il existe aussi des machines à vendanger à deux systèmes de secouage disposés l'un à la suite de l'autre, à la même hauteur, pour augmenter l'efficacité au niveau des taux de chute du raisin (WO-97/47176). Toutefois, les machines faisant application de cette construction cassent énormément de branches de la vigne à cause de la répétition des coups dans la même zone de secouage et créent des problèmes d'équilibrage, de sorte que les résultats ne sont pas satisfaisants.

Certains constructeurs de matériels d'oléiculture ont proposé d'élever la hauteur des ensembles de secouage des machines à vendanger classiques pour l'adapter à la hauteur des oliviers.

Toutefois, l'augmentation de la hauteur du système de récolte a des limites, de sorte qu'elle ne permet pas, à elle seule, de résoudre les problèmes particuliers que pose la récolte des petits fruits portés par des alignements d'arbres ou d'arbustes fruitiers de hauteur plus élevée que celle des rangs de vigne, en particulier dans les oliveraies.

L'un de ces problèmes est la hauteur nécessairement réduite du passage des arbres fruitiers sous la voûte de l'engin porteur enjambeur, c'est-à-dire la hauteur du passage ménagé sous la voûte supérieure du châssis de ce dernier (ladite voûte se situant généralement à une distance de l'ordre de 2.20 m par rapport au sol, correspondant à une hauteur de secouage de l'ordre de 1.80 m) à l'arrière duquel est montée ou attelée la machine de récolte proprement dite. Pour pallier ce problème, les oléiculteurs entretiennent des haies d'oliviers assez basses afin de pouvoir les enjamber, ce qui a pour inconvénient de limiter le rendement des arbres cultivés avec une hauteur réduite.

Le deuxième problème découle de la réalisation des systèmes de secouage avec un nombre important de paires de bras cueilleurs superposés (une douzaine de paires de bras cueilleurs superposés étant considérée comme un nombre maximum). Une telle construction a pour inconvénient de provoquer des vibrations insupportables pour le conducteur de la machine, ces vibrations nuisent par ailleurs à la fiabilité du système de secouage en raison de la surcharge de bras cueilleurs montés sur un même arbre oscillant.

Le document FR 2 298 929 divulgue une machine de à vendanger comportant une tête de récolte selon le préambule de la revendication 1.

Dans le document WO-97/15182, est très sommairement décrite une machine à vendanger, dont le but est très éloigné des problèmes que vise à solutionner la présente invention.

En effet, ce document vise une écaille pivotante de plancher de réception de la récolte d'une machine à vendanger et aucune information n'est donnée sur l'utilité du montage légèrement décalé des bras secoueurs illustré à la figure 2. Si l'on interprète trop rapidement la figure 2 du document WO-97/15182 comme illustrant un ensemble de secouage comportant une unité de secouage inférieure et une unité de secouage supérieure décalée vers l'avant par rapport à ladite unité de secouage inférieure et au sens d'avancement de la machine de récolte, en cours de travail, un tel agencement présenterait de sérieux inconvénients notamment,
- le décalage de l'unité de secouage inférieure vers l'arrière entrainerait un rallongement de la longueur des machines de récolte, rendant les manoeuvres de celles-ci plus difficiles entre les rangées d'arbres des vergers, en particulier en bout de rangées ;
- une détérioration de la récolte obtenue, due au fait que les fruits détachés en premier d'un arbre par l'action de l'unité de secouage supérieure tomberaient, en cascade et en chute lente, sur les branches inférieures de l'arbre, sur lesquelles certains resteraient accrochés, de sorte qu'un certain volume de ces fruits seraient frappés lors de leur chute ou battus une seconde fois, lors du passage de la partie basse des arbres dans l'unité de secouage inférieure, ce qui risquerait d'éclater ou d'abîmer les fruits.

Toutefois, si l'on considère le très faible décalage horizontal visible entre les extrémités des secoueurs des deux ensembles de secouage, il semble plus vraisemblable que les pièces d'accouplement et d'actionnement en forme de U renversés des unités de secouage sont disposées à deux niveaux différents, avec un faible écart vertical, et que les tiges de secouage sont fixées en alternance ou autrement sur les éléments verticaux (non représentés) de ces pièces d'actionnement. Dans ces conditions, on peut considérer que la machine décrite dans le document WO-97/15182 ne comporte pas une unité de secouage inférieure et une unité de secouage supérieure, mais deux unités de secouage disposées sensiblement face à face et au même niveau et dont chaque côté est constitué de tiges de secouage fixées sur l'une ou l'autre des pièces d'accouplement et d'actionnement.

Le document WO-02/19794 décrit une machine de récolte dont le système de secouage est composé de deux unités de secouage installées face à face et dont les tiges de secouage sont fixées, d'une part, à un arbre vertical oscillant, et, d'autre part, au châssis de la machine, alors que dans le document WO-97/47176, les deux extrémités des secoueurs des différentes unités de secouage sont reliées à un seul et même arbre d'actionnement. De plus, le document WO-97/15182 décrit successivement un moyen permettant de communiquer un mouvement oscillatoire aux deux unités de secouage, constitué de deux colliers disposés au centre des barres d'actionnement, ces colliers étant mis en mouvement par un système de secouage non défini dans le document.

Un objet de l'invention est de solutionner les problèmes posés par les machines de récolte mécanisée de petits fruits, en particulier d'olives, au moyen de machines comportant un système de secouage du genre équipant aujourd'hui la plupart des machines à vendanger classiques.

Selon l'invention, cet objectif est atteint grâce à une machine comportant une tête de récolte comprenant un système de secouage constitué de deux ensembles de détachement des fruits montés en vis-à-vis et séparés par un espace vertical, ces ensembles comportant, chacun, une pluralité de secoueurs superposés, par exemple constitués par des barreaux flexibles, fixés, par l'intermédiaire de leurs extrémités, à deux arbres verticaux dont l'un au moins est un arbre d'actionnement oscillant assujetti à une commande de secouage permettant de lui communiquer un mouvement oscillatoire, ce système de secouage étant principalement remarquable en ce que chacun de ses ensembles verticaux de détachement des fruits comprend deux sous-ensembles, soit un premier sous-ensemble inférieur et un deuxième sous-ensemble supérieur décalé vers l'arrière par rapport audit premier sous-ensemble inférieur et au sens d'avancement de la machine, en cours de travail, chaque sous-ensemble de bras cueilleurs superposés étant animé par un arbre oscillant d'entraînement qui lui est propre.

Ce système de secouage procure plusieurs avantages :
- il permet de répartir les bras cueilleurs de chaque ensemble de secouage, sur deux arbres d'entraînement distincts, ce qui solutionne le problème des contraintes dues à l'entraînement d'un grand nombre de bras cueilleurs par un même arbre oscillant.
- il permet de solutionner le problème des arbres (par exemple oliviers) ou arbustes fruitiers qui se trouvent ployés vers l'avant lors de leur passage sous la voûte du châssis de l'engin porteur enjambeur ; de sorte que les bras cueilleurs des sous-ensembles inférieurs secouent en premier lieu efficacement la zone du bas de l'arbre, puis l'arbre se redresse après passage sous la voûte et les bras cueilleurs des sous-ensembles supérieurs secouent efficacement, à leur tour, la zone du haut de l'arbre qui se trouve ainsi complètement récolté, en deux temps, aucune desdites zones de récolte n'étant secouée à deux reprises.
- il permet d'augmenter considérablement la hauteur du système de secouage et du nombre de bras cueilleurs (par exemple ; 28 paires de bras cueilleurs réparties sur 3.40 m de hauteur).

Selon un mode d'exécution avantageux, les arbres verticaux d'animation des bras cueilleurs des sous-ensembles inférieur et supérieur, respectivement, qui définissent deux zones de secouage avant et arrière, sont séparés par une distance qui est sensiblement égale à la distance de plantation des arbres fruitiers. Plus précisément, le décalage entre les arbres d'animation des sous-ensembles inférieurs et supérieurs, est sensiblement égal à la longueur des zones de secouage définies par lesdits sous-ensembles. Cette disposition caractéristique, permet d'éviter le cisaillement de l'arbre, compte tenu du fait que l'on a toujours un arbre en prise, ce qui permet de lisser la charge sur le moteur de secouage et son mécanisme. De la sorte, les actions de secouage générées par les unités de secouage ou paires de sous-ensembles de secouage inférieure et supérieure, sont appliquées successivement sur chaque arbre fruitier à récolter, et non pas simultanément.

Selon un autre mode d'exécution intéressant, les bras cueilleurs superposés des sous-ensembles inférieurs et les bras cueilleurs superposés des sous-ensembles supérieurs sont animés en opposition, ce qui signifie que lorsque les bras cueilleurs des sous-ensembles inférieurs se déplacent dans un sens, les bras cueilleurs des sous-ensembles supérieurs se déplacent dans un sens opposé. Cet agencement permet de réduire considérablement les vibrations, ce qui offre en outre les possibilités d'utiliser des enjambeurs couramment employés en viticulture.

Selon un mode d'exécution préféré, la paire de sous-ensembles inférieurs ou unité de secouage inférieure et la paire de sous-ensembles supérieurs ou unité de secouage supérieure ont sensiblement la même hauteur et, comportent, de préférence, le même nombre de bras cueilleurs. Le niveau de séparation entre l'unité ou paire de sous-ensembles inférieure et l'unité ou paire de sous-ensembles supérieure, est prévu à mi-hauteur ou approximativement à mi-hauteur de la hauteur totale des ensembles de secouage.

Selon une autre disposition caractéristique les moyens d'animation, en sens opposé, des unités de secouage inférieure et supérieure, ou paire de sous-ensembles de secouage inférieure et supérieure comprennent un arbre rotatif sur lequel sont montés deux excentriques diamétralement opposés au niveau de leur excentration, chacun de ces excentriques étant relié par l'intermédiaire d'une première bielle à un premier ensemble pivotant fixé sur l'arbre oscillant d'animation d'un sous-ensemble supérieur arrière, ce premier ensemble pivotant étant lui-même relié au moyen d'une deuxième bielle à un deuxième ensemble pivotant fixé à l'arbre oscillant d'animation du sous-ensemble de secouage inférieur avant.

Les buts, caractéristiques et avantages ci-dessus, et d'autres encore, ressortiront mieux de la description qui suit et des dessins annexés dans lesquels :
La figure 1 est une vue en perspective et à caractère schématique d'un système de secouage de tête de récolte selon l'invention.
La figure 2 est une vue de côté de ce système de secouage.
La figure 3 est une autre vue de côté de ce système de secouage représenté en cours d'avancement, dans une position selon laquelle l'unité de secouage inférieure secoue la partie inférieure d'un arbre ployé vers l'avant, sous la poussée du pont ou voûte constituant la partie supérieure du porteur enjambeur.
La figure 4 est une vue de côté analogue à la figure 3, représentant le système de secouage dans une position suivant laquelle l'unité de secouage supérieure secoue la partie supérieure de l'arbre redressé, après le passage de la voûte du porteur enjambeur.
La figure 5 est une vue en plan du mécanisme d'actionnement des bras cueilleurs des unités de secouage inférieure et supérieure de la tête de récolte.

On se reporte auxdits dessins pour décrire un exemple d'exécution intéressant, bien que nullement limitatif, de la machine de récolte de petits fruits selon l'invention et, plus précisément de la tête de récolte de cette dernière.

La tête de récolte de petits fruits selon l'invention (représentée de manière simplifiée sur les dessins annexés) comprend, de façon similaire aux machines à vendanger le raisin, un bâti 1 en forme de portique et supportant notamment, d'une part, un système de secouage constitué de deux ensembles de détachement des fruits 2A, 2B, montés en vis-à-vis et séparés par un espace vertical et, d'autre part, deux systèmes de convoyage (non représentés) pour la réception et l'acheminement de la récolte jusqu'à deux bennes de réception 3 installées latéralement et en partie haute du châssis 1A de la machine. Ce dernier peut être équipé de roues (non représentées) et la machine comporte une motorisation et des systèmes de régulation (également non représentés) permettant, respectivement, l'entraînement et le contrôle du fonctionnement de ses différents organes actifs. Une telle machine peut être automotrice ou montée, de manière amovible, sur un véhicule porteur enjambeur, ou tirée par un tracteur.

Selon une importante disposition caractéristique de l'invention, chaque ensemble de détachement des fruits 2A, 2B est constitué de deux sous-ensemble, soit, respectivement, un premier sous-ensemble inférieur 4A ou 4B et un deuxième sous-ensemble supérieur 5A ou 5B décalé vers l'arrière par rapport audit premier sous-ensemble inférieur 4A ou 4B et au sens d'avancement de la machine en cours de travail (indiqué par la flèche F sur les figures des dessins). Ce décalage est désigné par la référence X sur les dessins.

De la sorte, le système de secouage comprend, de l'avant vers l'arrière en considérant le sens de déploiement de la machine, en cours de travail :
- une unité de secouage inférieure constituée de la paire de sous-ensembles inférieurs 4A, 4B ;
- une unité de secouage supérieure constituée de la paire de sous-ensembles supérieurs 5A, 5B, ladite unité de secouage supérieure 5A-5B étant disposée de manière décalée vers l'arrière par rapport à l'unité de secouage inférieure 4A-4B.

Chaque sous-ensemble de secouage 4A, 4B, 5A, 5B est animé par un arbre oscillant qui lui est propre, respectivement, 6A, 6B, 7A, 7B.

Le sous-ensemble de secouage inférieur 4A est animé par un arbre vertical oscillant 6A ; le sous-ensemble de secouage inférieur 4B est actionné par un arbre oscillant 6B ; le sous-ensemble de secouage supérieur 5A est animé par un arbre vertical oscillant 7A, tandis que le sous-ensemble de secouage supérieur 5B est entraîné par un arbre oscillant 7B.

Selon un mode d'exécution avantageux, chaque sous-ensemble de secouage 4A, 4B, 5A, 5B est constitué d'une pluralité de bras cueilleurs ou secoueurs superposés 8. Ces secoueurs espacés verticalement, sont, par exemple, constitués par des barreaux flexibles fixés, par l'intermédiaire de leurs extrémités, d'une part, à un premier arbre vertical 6A, ou 6B, ou 7A, ou 7B monté, avec une aptitude d'oscillation, autour de son axe longitudinal, sur le bâti 1 du système de secouage, et, d'autre part, à un deuxième arbre vertical 9A, ou 9B, ou 10A, ou 10B qui est, de préférence, fixe par rapport audit bâti 1, mais qui pourrait être installé avec une aptitude d'oscillation motorisée ou monté fou. De préférence, les secoueurs superposés 8 de chaque ensemble de secouage 4A, 5A sont légèrement décalés verticalement par rapport aux secoueurs de l'autre sous-ensemble de secouage 4B, 5B, respectivement, disposé en vis-à-vis.

De manière avantageuse, les secoueurs 8 présentent la forme générale d'une épingle à cheveux constituée de deux branches 8a, 8b légèrement divergentes se raccordant par une portion courbe, l'extrémité de l'une de ces branches ou branche d'animation 8a étant reliée à un arbre d'actionnement (arbres 6A, 6B, 7A, 7B), tandis que l'extrémité de l'autre (8b) desdites branches constituant la branche active du secoueur étant rattachée à un support fixe (arbres 9A, 9B, 10A, 10B). Ces secoueurs flexibles sont exécutés dans un matériau semi-rigide, par exemple en polyamide ou autre matière présentant des caractéristiques similaires de flexibilité et de résistance à la flexion (par exemple : polyester, fibre de verre, etc.).

La branche active 8b de ces secoueurs 8 a une longueur supérieure à la longueur de la branche d'animation 8a et elle présente une portion extrême courbée en direction de l'axe de ladite branche d'animation.

Selon un mode d'exécution avantageux, les arbres verticaux d'animation 6A, 7A, et 6B, 7B des bras cueilleurs des sous-ensembles inférieurs 4A, 4B et supérieurs 5A, 5B, respectivement, qui définissent deux zones de secouage (zone de secouage avant basse et zone de secouage arrière haute), sont séparés par une distance X qui est de préférence sensiblement égale à la distance de plantation des arbres fruitiers. Plus concrètement, le décalage X entre les arbres d'animation des sous-ensembles inférieurs et supérieurs, est sensiblement égal à la longueur des zones de secouage avant et arrière définies par lesdits sous-ensembles.

Selon un autre mode d'exécution intéressant, les bras cueilleurs superposés des sous-ensembles inférieurs et les bras cueilleurs superposés des sous-ensembles supérieurs sont animés en opposition, ce qui signifie que lorsque les bras cueilleurs des sous-ensembles inférieurs se déplacent dans un sens, les bras cueilleurs des sous-ensembles supérieurs se déplacent dans un sens opposé.

Selon un mode d'exécution préféré, le niveau de séparation entre l'unité ou paire de sous-ensembles inférieure avant 4A-4B et l'unité ou paire de sous-ensembles supérieure arrière 5A-5B, est prévu à mi-hauteur ou sensiblement à mi-hauteur de la hauteur totale des ensembles de secouage 4A-5A ou 4B-5B.

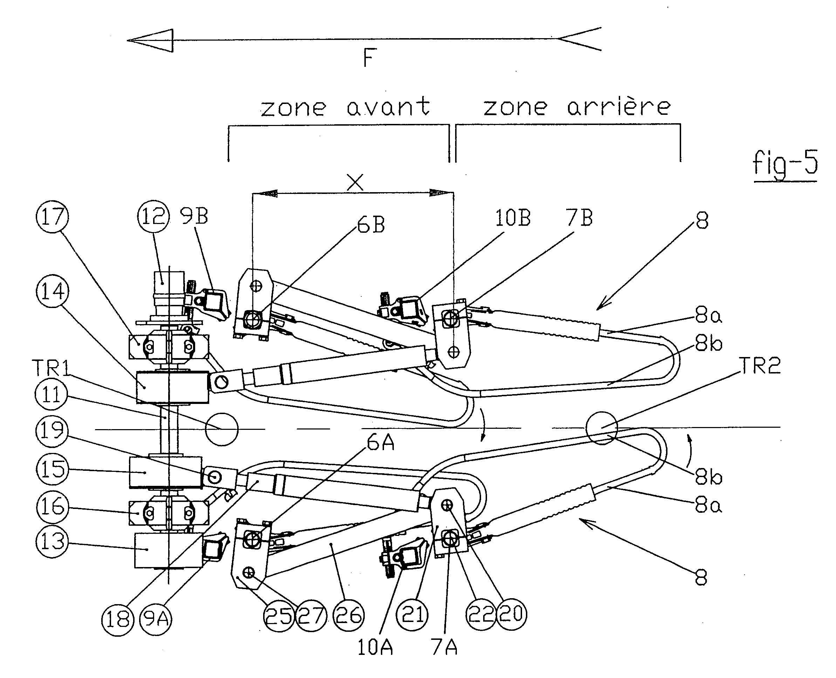

La figure 5 illustre un mode de configuration intéressant des moyens d'entraînement des arbres oscillants 6A, 7A, 6B, 7B permettant la mise en oeuvre de cette disposition caractéristique. Sur cette figure, les références TR1 et TR2 représentent des troncs d'arbres fruitiers tels que des oliviers

Ces moyens d'entrainement comprennent un arbre horizontal 11 monté à la partie supérieure et à l'avant du bâti 1 de la tête de récolte. Cet arbre 11 est entraîné en rotation par un moteur hydraulique 12 ou par un moteur d'un autre type, accouplé à l'une des extrémités dudit arbre. L'extrémité opposée de ce dernier est munie d'un volant d'inertie 13 destiné à lisser les coups de charge de secouage.

Sur cet arbre rotatif 11 sont montés deux excentriques, soit un excentrique droit 14 et un excentrique gauche 15, ces excentriques étant diamétralement opposés au niveau de leur excentration de sorte à constituer un vilebrequin monté sur des paliers 16 et 17.

Chaque excentrique 14 et 15 actionne un système d'entraînement des ensembles de secouage gauche 4A-5A et droit 4B-5B, respectivement. Ce système d'entraînement étant le même pour les ensembles de secouage gauche et droit, on décrit simplement le système d'entrainement de l'ensemble de secouage gauche.

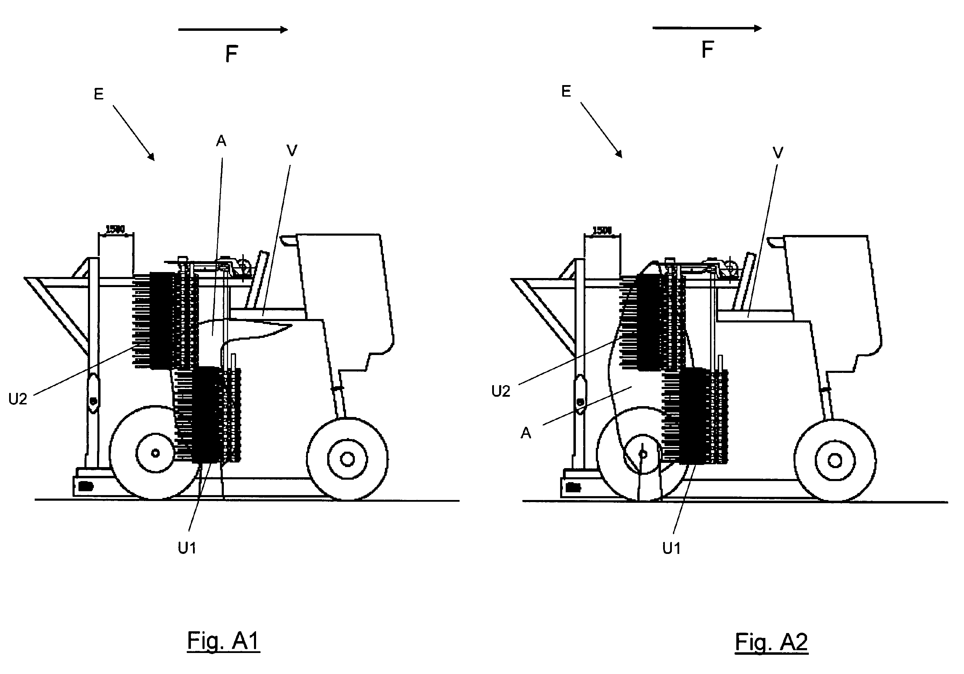

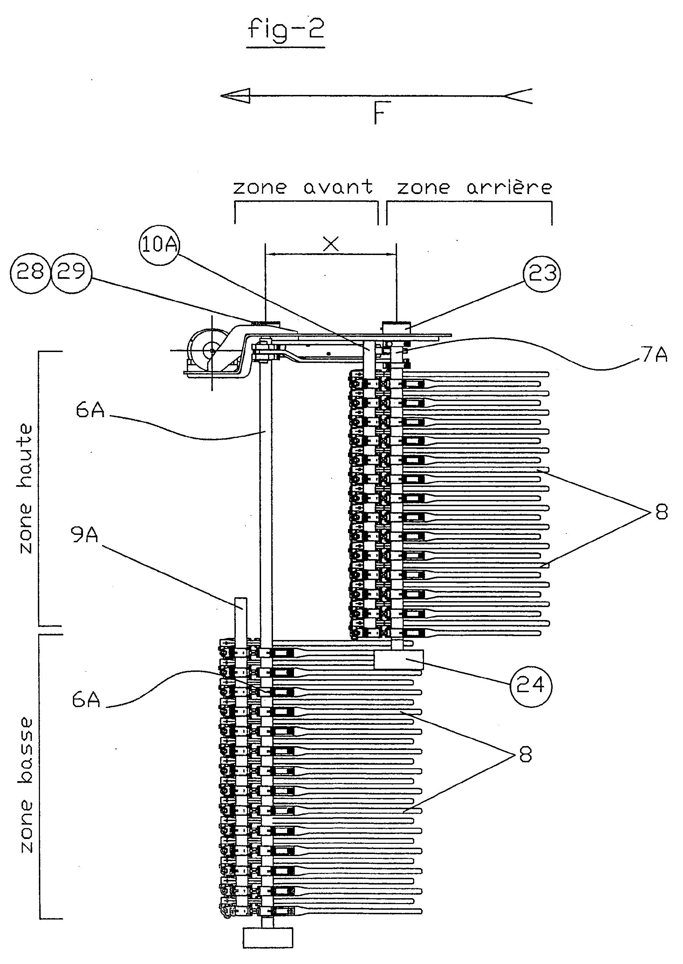

L'excentrique gauche 15 communique un mouvement de va et vient à une bielle 18. Cette bielle est reliée par l'intermédiaire de l'une de ses extrémités et au moyen d'un axe d'articulation 19 à l'excentrique 15 et, par l'intermédiaire de son extrémité opposée et à l'aide d'un axe d'articulation 20 à un premier ensemble pivotant 21. Cet ensemble pivotant est boulonné à l'arbre oscillant 7A (ou 7B) muni, à son extrémité supérieure d'un pivot cylindrique 22 monté dans un palier 23 et emmanché, dans sa partie inférieure, dans un palier 24 (figure 2).

L'arbre oscillant 7A peut recevoir et animer une pluralité de bras cueilleurs 8 (par exemple 14 bras cueilleurs superposés) fixés par bridage, et constituant, ensemble le sous-ensemble arrière supérieur gauche 5A. L'autre extrémité de ces bras cueilleurs est fixée sur un arbre ou support fixe 10A. Le premier ensemble pivotant 21 sert aussi à animer un deuxième ensemble pivotant 25, en sens inverse, à l'aide d'une bielle 26. Cette bielle 26 est reliée, par l'intermédiaire de l'une de ses extrémités et au moyen d'un axe d'articulation 20, au premier ensemble pivotant 21 et, par l'intermédiaire de son extrémité opposée et au moyen d'un axe d'articulation 27, au deuxième ensemble pivotant 25. Le deuxième ensemble pivotant 25 est fixé, par exemple par boulonnage, sur l'arbre oscillant 6A lequel est muni, à son extrémité supérieure, d'un pivot cylindrique 28 monté dans un palier 29 et, dans sa partie inférieure, emmanché dans un palier 30.

On comprend que, selon ce mode d'exécution, lorsque le premier ensemble pivotant 21 est pivoté dans un sens, le deuxième ensemble pivotant 25 se trouve pivoté dans le sens opposé, ce qui entraîne des mouvements de sens contraire des bras cueilleurs de l'unité de secouage supérieure arrière par rapport aux bras cueilleurs de l'unité de secouage inférieure avant.

L'arbre oscillant 6A peut recevoir et animer une pluralité de bras cueilleurs 8 (par exemple 14 bras cueilleurs superposés) fixés par bridage et constituant, ensemble, le sous-ensemble avant inférieur gauche 4A. L'extrémité opposée des bras cueilleurs 8 est fixée sur un support ou arbre fixe 9A.

Comme indiqué précédemment, les moyens d'entrainement de l'ensemble de secouage droit 4B-5B, à partir de l'excentrique droit 14, sont identiques, de sorte à avoir un déplacement quasiment parallèle des bras cueilleurs 8 des unités de secouage inférieure 4A-4B et supérieure 5A-5B, respectivement.

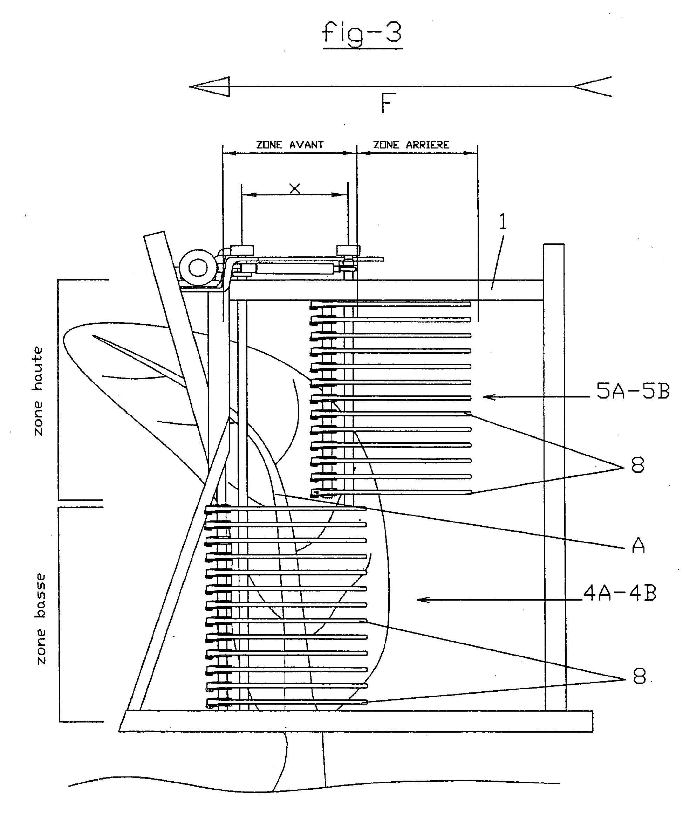

La figure 3 représente le système de secouage de la tête de récolte, en cours d'avancement, dans une position suivant laquelle l'unité de secouage avant inférieure 4A-4B secoue la partie inférieure d'un arbre A ployé vers l'avant, lors de son passage sous la voûte du châssis du porteur enjambeur.

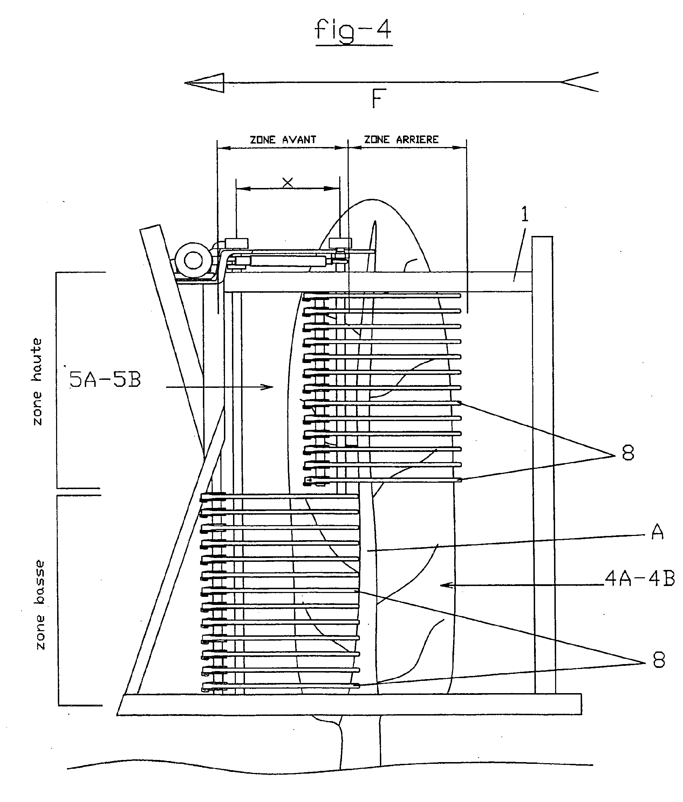

La figure 4 est une vue analogue représentant ce système de secouage dans une position selon laquelle la partie supérieure de l'arbre A redressé après son passage sous ladite voûte, est secouée par l'unité de secouage supérieure arrière 5A-5B de la tête de récolte.

## Revendications

1. Tête de récolte de petits fruits produits en arboriculture fruitière, en particulier pour la récolte des olives, comportant un système de secouage constitué de deux ensembles de détachement des fruits (2A, 2B) montés en vis-à-vis et séparés par un espace vertical, chacun de ces ensembles de détachement des fruits (2A, 2B) comprend deux sous-ensembles (4A, 5A et 4B, 5B), soit un premier sous-ensemble inférieur (4A ou 4B) et un deuxième sous-ensemble supérieur (5A, 5B) décalé vers l'arrière par rapport audit sous-ensemble inférieur (4A, 4B) et au sens d'avancement de la machine en cours de travail, chacun de ces sous-ensembles (4A, 5A et 4B, 5B) étant constitué d'une pluralité de secoueurs superposés (8), **caractérisé en ce que** les secoueurs superposés (8) sont constitués par des barreaux flexibles fixés, par l'intermédiaire de leurs extrémités à deux arbres verticaux (6A, 9A ou 6B, 9B ou 7A, 10A ou 7B, 10B) dont l'un au moins (6A, ou 6B, 7A ou 7B) est un arbre d'actionnement oscillant assujetti à une commande de secouage permettant de lui communiquer un mouvement oscillatoire.

2. Tête de récolte selon la revendication 1, **caractérisée en ce que** le décalage (X) entre l'unité de secouage inférieure constituée de la paire de sous-ensembles inférieurs (4A-4B) et l'unité de secouage supérieure formée de la paire de sous-ensembles supérieurs (5A-5B) est sensiblement égal à la longueur des zones de secouage avant et arrière définies par lesdites unités de secouage.

3. Tête de récolte selon la revendication 1, **caractérisée en ce que** le décalage (X) entre les arbres d'animation (6A ou 6B) des sous-ensembles inférieurs (4A, 4B) et les arbres d'animation (7A, 7B) des sous-ensembles supérieurs (5A, 5B) est sensiblement égal à la longueur des zones de secouage avant et arrière définies par lesdits sous-ensembles.

4. Tête de récolte selon l'une quelconque des revendications 1 à 3, **caractérisée en ce que** les moyens de détachement des fruits (8) de l'unité de secouage inférieure (4A, 48) sont animés en opposition, c'est-à-dire en sens opposé, par rapport aux moyens de détachement des fruits (8) de l'unité de secouage supérieure (5A, 5B).

5. Tête de récolte selon l'une quelconque des revendications 1 à 4, **caractérisée en ce que** le niveau de séparation entre l'unité ou paire de sous-ensembles inférieure (4A-4B) et l'unité ou paire de sous-ensembles supérieure (5A-5B), est prévu à mi-hauteur ou sensiblement à mi-hauteur de la hauteur totale des ensembles de secouage (4A-5A ou 4B-5B).

6. Tête de récolte selon l'une quelconque des revendications 1 à 5, **caractérisée en ce que** chaque sous-ensemble de secouage (4A, 4B, 5A, 5B) est animé par un arbre oscillant qui lui est propre (6A, 6B, 7A, 7B).

7. Tête de récolte selon l'une des revendications 5 ou 6, **caractérisée en ce que** les moyens d'animation, en sens opposé, des unités de secouage inférieure (4A-4B) et supérieure (5A-5B) comprennent un arbre rotatif sur lequel sont montés deux excentriques (14, 15) diamétralement opposés au niveau de leur excentration, chacun de ces excentriques étant relié par l'intermédiaire d'une première bielle (18) à un premier ensemble pivotant (21) fixé sur l'arbre oscillant (7A, ou 7B) d'animation d'un sous-ensemble supérieur arrière (5A, ou 5B), ce premier ensemble pivotant (21) étant lui-même relié au moyen d'une deuxième bielle (26) à un deuxième ensemble pivotant (25) fixé à l'arbre oscillant (6A, 6B) d'animation du sous-ensemble de secouage inférieur avant (4A, 4B).

8. Machine de récolte de petits fruits produits en arboriculture fruitière, **caractérisée en ce qu'**elle est munie d'une tête de récolte selon l'une quelconque des revendications 1 à 7.

## Patentansprüche

1. Erntekopf für kleine Früchte im Obstanbau, insbesondere für die Ernte von Oliven, umfassend ein Rüttelsystem, bestehend aus zwei Einheiten zum Ablösen der Früchte (2A, 2B), die gegenüberliegend und durch einen vertikalen Zwischenraum getrennt angebracht sind, wobei jede dieser Einheiten zum Ablösen der Früchte (2A, 2B) zwei Untereinheiten (4A, 5A und 4B, 5B) umfasst, also eine erste untere Untereinheit (4A oder 4B) und eine zweite obere Untereinheit (5A, 5B), die gegenüber der unteren Untereinheit (4A, 4B) und in die Richtung des Vorrückens der Maschine bei Betrieb nach hinten versetzt ist, wobei jede dieser Untereinheiten (4A, 5A und 4B, 5B) aus einer Vielzahl von übereinanderliegenden Rüttlern (8) besteht, **dadurch gekennzeichnet, dass** die übereinanderliegenden Rüttler (8) aus biegsamen Stangen gebildet werden, die mit ihren Enden an zwei vertikalen Wellen (6A, 9A oder 6B, 9B oder 7A, 10A oder 7B, 10B) befestigt sind, von denen mindestens eine (6A oder 6B, 7A oder 7B) eine oszillierende Antriebswelle ist, die einer Rüttelsteuerung unterliegt, die es erlaubt, eine oszillierende Bewegung an sie zu übertragen.

2. Erntekopf nach Anspruch 1, **dadurch gekennzeichnet, dass** der Versatz (X) zwischen der unteren Rütteleinheit, gebildet von dem Paar der unteren Untereinheiten (4A-4B), und der oberen Rütteleinheit, gebildet von dem Paar der oberen Untereinheiten (5A-5B), etwa der Länge der vorderen und hinteren Rüttelzonen, definiert durch die Rütteleinheiten, entspricht.

3. Erntekopf nach Anspruch 1, **dadurch gekennzeichnet, dass** der Versatz (X) zwischen den Antriebswellen (6A oder 6B) der unteren Untereinheiten (4A, 4B) und den Antriebswellen (7A, 7B) der oberen Untereinheiten (5A, 5B) etwa der Länge der vorderen und hinteren Rüttelzonen, definiert durch die Untereinheiten, entspricht.

4. Erntekopf nach einem der Ansprüche 1 bis 3, **dadurch gekennzeichnet, dass** die Mittel zum Ablösen der Früchte (8) der unteren Rütteleinheit (4A, 4B) gegenläufig angetrieben werden, das heißt in entgegengesetzter Richtung bezogen auf die Mittel zum Ablösen der Früchte (8) der oberen Rütteleinheit (5A, 5B).

5. Erntekopf nach einem der Ansprüche 1 bis 4, **dadurch gekennzeichnet, dass** die Trennebene zwischen der unteren Einheit oder dem Paar der unteren Untereinheiten (4A-4B) und der oberen Einheit oder dem Paar der oberen Untereinheiten (5A-5B) auf halber Höhe oder etwa auf halber Höhe der Gesamthöhe der Rütteleinheiten (4A-5A oder 4B-5B) vorgesehen ist.

6. Erntekopf nach einem der Ansprüche 1 bis 5, **dadurch gekennzeichnet, dass** jede Rütteluntereinheit (4A, 4B, 5A, 5B) von einer ihr eigenen oszillierenden Welle (6A, 6B, 7A, 7B) angetrieben wird.

7. Erntekopf nach einem der Ansprüche 5 oder 6, **dadurch gekennzeichnet, dass** die gegenläufigen Antriebsmittel der unteren Rütteleinheiten (4A-4B) und der oberen Rütteleinheiten (5A-5B) eine rotierende Welle umfassen, auf der zwei Exzenter (14, 15) angebracht sind, die auf Höhe ihrer Exzentrizität diametral entgegengesetzt sind, wobei jeder dieser Exzenter mittels einer ersten Stange (18) mit einer erstenSchwenkeinheit (21) verbunden ist, die an der oszillierenden Antriebswelle (7A oder 7B) einer hinteren oberen Untereinheit (5A oder 5B) befestigt ist, wobei diese erste Schwenkeinheit (21) selbst mittels einer zweiten Stange (26) mit einer zweiten Schwenkeinheit (25) verbunden ist, die an der oszillierenden Antriebswelle (6A, 6B) der vorderen unteren Rütteluntereinheit (4A, 4B) befestigt ist.

8. Erntemaschine für kleine Früchte im Obstanbau, **dadurch gekennzeichnet, dass** sie mit einem Erntekopf nach einem der Ansprüche 1 bis 7 ausgestattet ist.

## Claims

1. Picking head for small fruits produced in orchards, particularly for the harvesting of olives, comprising a shaking system consisting of two fruit-detaching assemblies (2A, 2B) mounted opposite each other and separated by a vertical space, **characterised in that** each of the said fruit-detaching assemblies (2A, 2B) comprises two sub-assemblies (4A, 5A and 4B, 5B), namely a first lower sub-assembly (4A or 4B) and a second upper sub-assembly (5A, 5B) offset towards the rear with respect to the said lower sub-assembly (4A, 4B) and in the direction of forward movement of the machine during working operations, each of the said sub-assemblies (4A, 5A and 4B, 5B) being made up of a plurality of superposed shakers (8), **characterised in that** the said superposed shakers are made up of flexible bars fastened at their ends to two vertical shafts (6A, 9A or 6B, 9B or 7A, 10A or 7B, 10B), at least one of which (6A, or 6B, 7A or 7B) is an oscillating actuating shaft linked to a shaking control that allows it to impart an oscillatory motion.

2. Picking head according to claim 1, **characterised in that** the offset (X) between the lower shaking unit formed by the pair of lower sub-assemblies (4A-4B) and the upper shaking unit formed by the pair of upper sub-assemblies (5A-5B) is approximately equal to the length of the front and rear shaking zones defined by the said shaking units.

3. Picking head according to claim 1, **characterised in that** the offset (X) between the actuating shafts (6A or 6B) of the lower sub-assemblies (4A, 4B) and the actuating shafts (7A, 7B) of the upper sub-assemblies (5A, 5B) is approximately equal to the length of the front and rear shaking zones defined by the said sub-assemblies.

4. Picking head according to any one of claims 1 to 3, **characterised in that** the fruit-detaching means (8) of the lower shaking unit (4A, 4B) are actuated in opposition, i.e. in an opposite direction, to the fruit-detaching means (8) of the upper shaking unit (5A, 5B).

5. Picking head according to any one of claims 1 to 4, **characterised in that** the level of separation between the unit or pair of lower sub-assemblies (4A-4B) and the unit or pair of upper sub-assemblies (5A-5B) is configured at mid-height or approximately mid-height with respect to the total height of the shaking assemblies (4A-5A or 4B-5B).

6. Picking head according to any one of claims 1 to 5, **characterised in that** each shaking sub-assembly (4A, 4B, 5A, 5B) is actuated by its own oscillating shaft (6A, 6B, 7A, 7B).

7. Picking head according to any one of claims 5 or 6, **characterised in that** the actuating means, working in opposite directions, of the lower shaking units (4A-4B) and the upper shaking units (5A-5B) comprise a rotating shaft on which are mounted two eccentrics (14, 15) with diametrically opposite eccentricity, each of the said eccentrics being linked by a first connecting rod (18) to a first pivoting assembly (21) fixed to the said oscillating actuating shaft (7A or 7B) of a rear upper sub-assembly (5A or 5B), the said first pivoting assembly (21) being linked in turn by a second connecting rod (26) to a second pivoting assembly (25) fixed to the oscillating actuating shaft (6A, 6B) of the front lower shaking assembly (4A, 4B).

8. Picking head for small fruits produced in orchards, **characterised in that** it is provided with a picking head according to any one of claims 1 to 7.
